(19) Europäisches Patentamt
European Patent Office
Office européen des brevets

(11) **EP 3 003 814 B1**

(12) **EUROPÄISCHE PATENTSCHRIFT**

(45) Veröffentlichungstag und Bekanntmachung des Hinweises auf die Patenterteilung:
**20.12.2017 Patentblatt 2017/51**

(21) Anmeldenummer: **14726522.7**

(22) Anmeldetag: **22.05.2014**

(51) Int Cl.:
**B60W 40/13** (2012.01)

(86) Internationale Anmeldenummer:
**PCT/EP2014/001379**

(87) Internationale Veröffentlichungsnummer:
**WO 2014/187564 (27.11.2014 Gazette 2014/48)**

(54) **VERFAHREN UND VORRICHTUNG ZUM BESTIMMEN DER MASSE EINES KRAFTFAHRZEUGS UND KRAFTFAHRZEUG MIT DERARTIGER VORRICHTUNG**

METHOD AND DEVICE FOR DETERMINING THE MASS OF A MOTOR VEHICLE, AND A MOTOR VEHICLE WITH A DEVICE OF THIS TYPE

PROCÉDÉ ET DISPOSITIF SERVANT À DÉTERMINER LE POIDS D'UN VÉHICULE AUTOMOBILE ET VÉHICULE AUTOMOBILE ÉQUIPÉ D'UN DISPOSITIF DE CE TYPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2013 DE 102013008839**

(43) Veröffentlichungstag der Anmeldung:
**13.04.2016 Patentblatt 2016/15**

(73) Patentinhaber: **WABCO GmbH**
**30453 Hannover (DE)**

(72) Erfinder:
• FLAUM, Nikolai
  30455 Hannover (DE)
• WALLBAUM, Torsten
  31089 Duingen (DE)

(74) Vertreter: Lauerwald, Jörg
  Wabco GmbH
  Postfach 91 12 62
  30432 Hannover (DE)

(56) Entgegenhaltungen:
DE-A1- 19 728 769    US-A1- 2008 249 693
US-A1- 2013 124 077

**Beschreibung**

Die Erfindung betrifft ein Verfahren zum Bestimmen der Masse eines Kraftfahrzeugs, insbesondere eines Nutzfahrzeugs, sowie eine Vorrichtung zum Ausführen eines derartigen Verfahrens. Ferner betrifft die Erfindung ein Kraftfahrzeug mit einer derartigen Vorrichtung zur Bestimmung der Masse des Kraftfahrzeugs.

Es ist bekannt, Kraftfahrzeuge, insbesondere Nutzfahrzeuge, mit Systemen zur Steuerung bzw. Regelung der Fahrdynamik, wie bspw. ein elektronisches Stabilitätssystem (ESP) oder ein elektronisch geregeltes Bremssystem (EBS), auszustatten, bei denen die Masse des Kraftfahrzeugs als Steuerparameter eingesetzt wird.

Die US20130124077A1 beschreibt eine Vorrichtung und ein Verfahren zur Ermittlung von Kraftstoffsparenden Informationen für den Fahrer eines Kraftfahrzeugs, wobei die Masse des Kraftfahrzeugs mit Hilfe der Fahrzeuggeschwindigkeit und der benötigten Antriebskraft ermittelt wird.

Die DE19728769A1 beschreibt ein Verfahren und eine Vorrichtung zur Ermittlung der Fahrzeugmasse, wobei die Verluste, welche durch die Beschleunigung des Motors entstehen, berücksichtigt werden.

Da Kraftfahrzeuge, insbesondere Nutzfahrzeuge, zwischen leeren und vollbeladenen Fahrzeugen eine große Beladungsvarianz aufweisen, ist eine pauschale schätzungsbasierte Massenbestimmung nicht genau genug. Zur Ermittlung der Fahrzeugmasse sind in der Regel jedoch keine Sensoren vorhanden. Daher muss die aktuelle Fahrzeugmasse durch geeignete Algorithmen berechnungsbasiert abgeschätzt werden.

Zur Bestimmung der Fahrzeugmasse ist es bekannt, die Masse $m$ aus der Bewegungsgleichung gemäß dem 2. Newtonschen Gesetz zu ermitteln:

$$m * a = F_A - F_L - F_R - F_{St} \qquad (1)$$

Dabei ist $m$ die Gesamtfahrzeugmasse, $a$ die Fahrzeugbeschleunigung, $F_A$ die Antriebskraft, $F_L$ der Luftwiderstand, $F_R$ der Rollwiderstand und $F_{St}$ der Steigungswiderstand.

Von Nachteil dabei ist jedoch, dass der Steigungswinkel $\alpha$ der Fahrbahn für die Ermittlung des Steigungswiderstands $F_{St}$ üblicherweise unbekannt ist. Ferner ist für die Berechnung der Antriebskraft $F_A$ die Kenntnis der Antriebsstrangüberset-zung erforderlich, was wiederum die Kenntnis von Getriebeübersetzung und Achsübersetzung voraussetzt.

Der Erfindung liegt daher die Aufgabe zugrunde, ein Verfahren bzw. eine Vorrichtung zu schaffen, um während der Fahrt in einfacher Weise möglichst genau die Fahrzeugmasse zu ermitteln.

Die Erfindung löst diese Aufgabe mit den Merkmalen eines Verfahrens zum Bestimmen der Masse eines Kraftfahrzeugs gemäß Anspruch 1, mit einer Vorrichtung zur Bestimmung der Masse eines Kraftfahrzeugs gemäß Anspruch 10 sowie mit einem Kraftfahrzeug gemäß Anspruch 15.

Das erfindungsgemäße Verfahren zum Bestimmen der Masse ($m$) eines Kraftfahrzeugs, insbesondere eines Nutzfahrzeugs, ist auf den Leistungssatzes der Mechanik gestützt und zeichnet sich dadurch aus, dass eine Geschwindigkeit ($v$) des Kraftfahrzeugs und eine Antriebsleistung ($P_A$) des Kraftfahrzeugs ermittelt wird. Die Masse ($m$) des Kraftfahrzeugs wird dann aus der Geschwindigkeit ($v$) und der Antriebsleistung ($P_A$) ermittelt.

Die Erfindung löst o. g. Aufgabe ferner mit einer Vorrichtung zur Bestimmung der Masse $m$ eines Kraftfahrzeugs, insbesondere eines Nutzfahrzeugs, mit geeigneten Mitteln zum Bestimmen der Geschwindigkeit $v$ des Kraftfahrzeugs sowie mit geeigneten Mitteln zum Bestimmen der Antriebsleistung $P_A$ des Kraftfahrzeugs. Ferner weist die erfindungsgemäße Vorrichtung Berechnungsmittel auf zur Ermittlung der Masse $m$ des Kraftfahrzeugs aus der Geschwindigkeit $v$ und der Antriebsleistung $P_A$.

Dabei ist auch eine Verwendung einer derartigen Vorrichtung, bestehend aus Mittel zum Bestimmen der Geschwindigkeit $v$ des Kraftfahrzeugs, Mittel zum Bestimmen der Antriebsleistung $P_A$ des Kraftfahrzeugs sowie ggf. Mittel zum Bestimmen der Leistung $P_R$ zum Überwinden der Fahrwiderstände des Kraftfahrzeugs und Berechnungsmittel zur Ermittlung der Masse $m$ des Kraftfahrzeugs, als Vorrichtung zur Bestimmung der Masse $m$ eines Kraftfahrzeugs, insbesondere eines Nutzfahrzeugs vorgesehen.

Schließlich löst die Erfindung die o. g. Aufgabe ferner mit einem Kraftfahrzeug, insbesondere einem Nutzfahrzeug, welches eine erfindungsgemäße Vorrichtung zur Bestimmung der Masse $m$ des Kraftfahrzeugs und/oder Mittel zum Durchführen der Schritte des erfindungsgemäßen Verfahrens aufweist.

Eine bevorzugte Ausführungsform der Erfindung basiert auf der Basis des Leistungssatzes, welcher angibt, dass die Summe aller an einem System angreifenden Leistungen zu jedem Zeitpunkt gleich der zeitlichen Änderung der kinetischen Energie des Systems ist:

$$\frac{d}{dt} E_{kin} = P_A - P_R \qquad (2)$$

wobei $E_{kin}$ die kinetische Energie, $P_A$ die Antriebsleistung und $P_R$ die Leistung zum Überwinden der Fahrwiderstände des Kraftfahrzeugs ist.

Die kinetische Energie $E_{kin}$ ist dabei die Summe aus der Translationsenergie und der Rotationsenergie. Die Translationsenergie ist die Energie, die ein Objekt aufgrund seiner Bewegung erhält und lässt sich durch die Geschwindigkeit $v$ und die Masse $m$ des bewegten Objekts beschreiben. Die Rotationsenergie ist die Energie eines Objektes, welches um eine Achse rotiert und lässt sich durch das Trägheitsmoment $J$ und die Winkelgeschwindigkeit $\omega$ beschreiben:

$$E_{kin} = \frac{1}{2}m * v^2 + \frac{1}{2}J * \omega^2 \qquad (3)$$

Zum Bestimmen der Masse $m$ des Kraftfahrzeugs wird Gleichung (3) in Gleichung (2) eingesetzt und nach $m$ aufgelöst. Dabei wird als Masse des Kraftfahrzeugs die Gesamtfahrzeugmasse inklusive einer Beladung und einem oder mehreren Insassen verstanden.

Im Rahmen des erfindungsgemäßen Verfahrens zum Bestimmen der Masse $m$ eines Kraftfahrzeugs wird die Geschwindigkeit $v$ des Kraftfahrzeugs ermittelt. Ferner werden die Antriebsleistung $P_A$ sowie die Leistung $P_R$ zum Überwinden von Fahrwiderständen ermittelt. Anhand der Geschwindigkeit $v$ des Kraftfahrzeugs, der Antriebsleistung $P_A$ und der Leistung $P_R$ zum Überwinden von Fahrwiderständen wird die Masse m des Kraftfahrzeugs entsprechend den Gleichungen (2) und (3) ermittelt.

Gemäß einer bevorzugten Ausführungsform der Erfindung wird die Geschwindigkeit $v$ des Kraftfahrzeugs durch ein gemessenes Raddrehzahlsignal n ermittelt. Dadurch kann vorteilhaft für die Ermittlung der Geschwindigkeit $v$ des Kraftfahrzeugs auf ein vorhandenes Messsystem zurückgegriffen werden, da die Raddrehzahl n notwendigerweise für andere Fahrzeugdynamik-Regelsysteme, wie bspw. ABS-Regelung, ebenfalls benötigt wird. Auf der Grundlage der von diesen Sensoren ohnehin bereit gestellten Daten ist es vorteilhaft möglich, die Geschwindigkeit $v$ des Kraftfahrzeugs einfach zu ermitteln.

In einer weiteren bevorzugten Ausführungsform der Erfindung wird die Antriebsleistung $P_A$ des Kraftfahrzeugs wie folgt ermittelt:

$$P_A = (M_{eng} - M_{fric}) * \omega_{eng} * \eta \qquad (4)$$

wobei $P_A$ die Antriebsleistung, $M_{eng}$ das Antriebsmoment des Motors, $M_{fric}$ das Reibmoment des Motors, $\omega_{eng}$ die Winkelgeschwindigkeit des Motors und $\eta$ der parametrierte Wirkungsgrad des Antriebsstrangs ist.

Die Antriebsleistung $P_A$ ist somit vorteilhaft über ein Motormomentenmodell, welches von einer modernen Motorsteuerung zur Verfügung gestellt wird, bestimmbar.

Gemäß einer weiteren bevorzugten Ausführungsform der Erfindung wird die Leistung $P_R$ zum Überwinden der Fahrwiderstände aus der Summe der einzelnen Fahrwiderstände $\Sigma F_{res}$ multipliziert mit der Geschwindigkeit $v$ des Kraftfahrzeugs ermittelt:

$$P_R = (F_L + F_R + F_{St}) * v = \sum F_{res} * v \qquad (5)$$

Der Luftwiderstand $F_L$ des Kraftfahrzeugs lässt sich wie folgt ermitteln:

$$F_L = \frac{1}{2}c_w * \rho_{Luft} * A * v^2 \qquad (6)$$

Dabei ist $c_w$ der Luftwiderstandsbeiwert, $\rho_{Luft}$ die Luftdichte, A die Stirnfläche des Fahrzeugs und $v$ die Geschwindigkeit des Fahrzeugs. Für den Luftwiderstandsbeiwert $c_w$ und die Luftdichte $\rho_{Luft}$ werden plausible Näherungswerte eingesetzt. Die Geschwindigkeit $v$ lässt sich anhand der gemessenen Raddrehzahl n ermitteln und die Stirnfläche A des Fahrzeugs ist als Fahrzeugparameter gespeichert.

Der Rollwiderstand $F_R$ des Kraftfahrzeugs lässt sich wie folgt ermitteln:

$$F_R = \mu * m * g \qquad (7)$$

Dabei ist $\mu$ der Rollwiderstandsbeiwert, g die Gravitationskonstante und $m$ die Masse des Fahrzeugs. Für den

Rollwiderstandsbeiwert $\mu$ und die Gravitationskonstante $g$ werden wieder plausible Näherungswerte eingesetzt.

Der Steigungswiderstand $F_{St}$ lässt sich wie folgt ermitteln:

$$F_{St} = m * g * \sin \alpha \qquad (8)$$

Dabei ist $\alpha$ der Steigungswinkel, $g$ die Gravitationskonstante und $m$ die Masse des Fahrzeugs. Im Falle einer ebenen Fahrbahn kann der Steigungswiderstand vernachlässigt werden, so dass die Leistung $P_R$ zum Überwinden der Fahrwiderstände sich somit vorteilhaft ohne zusätzliche Sensoren ermitteln lässt.

Im Falle einer geneigten Fahrbahn beinhaltet die Leistung $P_R$ zum Überwinden der Fahrwiderstände jedoch einen erheblichen Steigungswiderstand $F_{St}$, welcher bei der Berechnung der Masse $m$ berücksichtigt werden muss.

Sind die einzelnen Fahrwiderstände $F_L$, $F_R$, $F_{St}$ jedoch nicht bekannt, insbesondere der Steigungswiderstand $F_{St}$, dann lässt sich die Masse $m$ durch Betrachtung von zwei unterschiedlichen Zeitpunkten $t_0$, $t_1$ ermitteln. Liegen die beiden Zeitpunkte $t_0$, $t_1$ möglichst dicht beieinander, sind die Fahrwiderstände $F_L$, $F_R$, $F_{St}$ im Wesentlichen identisch. Die Erfindung sieht daher vor, die Geschwindigkeit $v$ des Kraftfahrzeugs und die Antriebsleistung $P_A$ des Kraftfahrzeugs für zwei verschiedene, insbesondere kurzzeitig aufeinanderfolgende, Zeitpunkte $t_0$, $t_1$ zu ermitteln. Dabei ist der zeitliche Abstand der beiden Zeitpunkte $t_0$, $t_1$ derart gewählt, dass die Summen der Fahrwiderstände $\Sigma F_{res}$ des Fahrzeugs zu diesen beiden Zeitpunkten $t_0$, $t_1$ (ebenso wie die einzelnen Fahrwiderstände zu den beiden Zeitpunkten) nicht signifikant voneinander abweichen.

Die Masse $m$ des Kraftfahrzeugs wird dann aus den Geschwindigkeiten $v_0$, $v_1$ und den Antriebsleistungen $P_{A0}$, $P_{A1}$ zu beiden Zeitpunkten $t_0$, $t_1$ ermittelt:

$$t_0: \quad \frac{1}{2} m * \frac{d}{dt} v_0^2 = P_{A0} - \frac{d}{dt} E_{rot0} - \Sigma F_{res} * v_0$$

$$t_1: \quad \frac{1}{2} m * \frac{d}{dt} v_1^2 = P_{A1} - \frac{d}{dt} E_{rot1} - \Sigma F_{res} * v_1 \qquad (9)$$

Dadurch lässt sich die Anzahl der Unbekannten minimieren und durch Einsetzen der einen Gleichung in die andere Gleichung vorteilhaft die Masse $m$ des Kraftfahrzeugs ermitteln:

$$m = \frac{2 * \left( P_{A1} - \dfrac{d}{dt} E_{rot1} - \dfrac{v_1}{v_0} \left( P_{A0} - \dfrac{d}{dt} E_{rot1} \right) \right)}{\left( \dfrac{d}{dt} v_1^2 - \dfrac{v_1}{v_0} * \dfrac{d}{dt} v_0^2 \right)} \qquad (10)$$

Gemäß einer weiteren bevorzugten Ausführungsform der Erfindung wird die Masse $m$ des Kraftfahrzeugs mit einem rekursiven Schätzalgorithmus ermittelt. Dieser Algorithmus berechnet rekursiv abhängig von mehreren Eingangsgrößen eine oder mehrere Ausgangsgrößen, wobei sich die Ausgangsgrößen schrittweise an die optimalen Werte annähern. Es lässt sich somit vorteilhaft der Zustand eines dynamischen Systems aus einer Reihe unvollständiger und verrauschter Daten schätzen.

Bevorzugt wird als Startwert für die gesuchte Fahrzeugmasse $m$ der bei der letzten Durchführung des rekursiven Schätzalgorithmus bestimmte bzw. geschätzte Wert $m$ der Fahrzeugmasse angenommen. Es können jedoch auch andere Werte, welche im Rahmen des jeweils zu erwartenden Wertebereichs liegen, vorgegeben werden.

Es werden die Geschwindigkeit $v$ und die Antriebsleistung $P_A$ des Kraftfahrzeugs mehr als zweimal, insbesondere regelmäßig in vorbestimmten Abständen, bestimmt und über den rekursiven Schätzalgorithmus die Kraftfahrzeugmasse $m$ ermittelt. Dies erhöht vorteilhaft die Genauigkeit der zu ermittelnden Kraftfahrzeugmasse $m$.

In einer weiteren bevorzugten Ausführungsform der Erfindung wird der rekursive Schätzalgorithmus mittels eines Kalman-Filters oder mittels eines Kleinste-Quadrate-Schätzers (RLS-Filter) durchgeführt. Diese Filter zeichnen sich vorteilhaft durch einen geringen Ressourcenbedarf aus und können somit in einer Recheneinrichtung mit geringer Rechenkapazität implementiert werden.

Gemäß einer weiteren Ausführungsform der Erfindung wird ein Mittelwert der Fahrzeugmasse $\hat{m}$ ermittelt, um die Genauigkeit der geschätzten Masse $m$ des Kraftfahrzeugs zu erhöhen. Dazu wird der ermittelte Wert der Masse $m$ zwischengespeichert. Wenn mindestens drei Messwerte der Masse $m$ vorliegen, wird unter Berücksichtigung der Varianz der Mittelwert $\hat{m}$ ermittelt:

$$\hat{m} = \frac{\sum \frac{m_i}{\sigma_i^2}}{\sum \frac{1}{\sigma_i^2}} \tag{11}$$

wobei $m_i$ der i-te Messwert der Masse $m$ ist und $\sigma_i$ die zu diesem Messwert $m_i$ zugehörige Varianz ist.

Um vorteilhaft Ausreißer bei der Bestimmung der geschätzten Masse $m$ zu erkennen, wird zunächst geprüft, ob ein Einzelwert der bestimmten Masse $m$ mehr als ein vorgegebener Grenzwert von den aus mehreren, insbesondere drei, Schätzwerten temporär berechneten Mittelwert $\hat{m}$ abweicht. In diesem Fall wird dieser Wert für die weitere Berechnung ausgeschlossen. Bspw. durch häufige Änderungen der Fahrbahnneigung oder aufgrund von stark verzerrten Berechnungssignalen durch Verspannungen des Antriebsstrangs beim Anfahren kann nämlich der geschätzte Wert für die Masse eines Kraftfahrzeugs stark von der tatsächlichen Masse abweichen.

Ferner wird erfindungsgemäß ein Computerprogramm bereitgestellt, welches Softwarecodeabschnitte mit Anweisungen zum Ausführen eines vorstehend beschriebenen Verfahrens auf einem Prozessor aufweist. Der Prozessor ist dabei bevorzugt ein Mikroprozessor in einem Steuergerät des Kraftfahrzeugs.

Die erfindungsgemäße Vorrichtung zur Bestimmung der Masse $m$ eines Kraftfahrzeugs, insbesondere eines Nutzfahrzeugs, weist geeignete Mittel zum Bestimmen der Geschwindigkeit $v$ des Kraftfahrzeugs, geeignete Mittel zum Bestimmen der Antriebsleistung $P_A$ des Kraftfahrzeugs sowie ggf. geeignete Mittel zum Bestimmen der Leistung $P_R$ zum Überwinden der Fahrwiderstände des Kraftfahrzeugs auf. Ferner weist die erfindungsgemäße Vorrichtung Berechnungsmittel auf zur Ermittlung der Masse $m$ des Kraftfahrzeugs aus der Geschwindigkeit $v$, der Antriebsleistung $P_A$ und ggf. der Leistung $P_R$ zum Überwinden der Fahrwiderstände des Kraftfahrzeugs. Eine derartige Vorrichtung kann ein zentrales oder ein separates Steuergerät sein oder in Systemen zur Regelung der Fahrdynamik, wie bspw. ESP, oder Bremssystemen, wie beispielsweise EBS, vorgesehen sein. Die Geschwindigkeit v des Kraftfahrzeugs und die Antriebsleistung PA des Kraftfahrzeugs wird für zwei verschiedene, insbesondere kurzzeitig aufeinanderfolgende, Zeitpunkte t0, t1 ermittelt. Dabei ist der zeitliche Abstand der beiden Zeitpunkte t0, t1 derart gewählt, dass die Summen der Fahrwiderstände ΣFres des Fahrzeugs zu diesen beiden Zeitpunkten t0, t1 (ebenso wie die einzelnen Fahrwiderstände zu den beiden Zeitpunkten) nicht signifikant voneinander abweichen. Als Mittel zum Bestimmen der Geschwindigkeit $v$ des Kraftfahrzeugs kann bspw. eine Messeinrichtung zum Messen der Raddrehzahl n vorgesehen sein.

Die Mittel zum Bestimmen der Antriebsleistung $P_A$ ermitteln bspw. die Antriebsleistung $P_A$ gemäß Gleichung (4) aus den Antriebsmoment des Motors $M_{eng}$, dem Reibmoment des Motors $M_{fric}$ und der gemessenen Winkelgeschwindigkeit des Motors $\omega_{eng}$.

Ferner sind ggf. Mittel zum Bestimmen der Leistung $P_R$ zum Überwinden der Fahrwiderstände vorgesehen, welche gemäß Gleichung (5) den Luftwiderstand, den Rollwiderstand und den Steigungswiderstand berücksichtigen.

Für den Fall, dass die Leistung $P_R$ zum Überwinden der Fahrwiderstände nicht bestimmt werden kann, bspw. aufgrund eines unbekannten Steigungswinkels $\alpha$ der Fahrbahn, ist die erfindungsgemäße Vorrichtung derart ausgestaltet, um die Geschwindigkeit $v$ des Kraftfahrzeugs und die Antriebsleistung $P_A$ des Kraftfahrzeugs zu zwei kurzzeitig aufeinander folgenden Zeitpunkten $t_0$, $t_1$ zu ermitteln.

Ein Berechnungsmittel der erfindungsgemäßen Vorrichtung ermittelt gemäß Gleichung (10) die Masse $m$ des Kraftfahrzeugs, da die Fahrwiderstände $F_L$, $F_R$, $F_{St}$ zu den beiden Zeitpunkten $t_0$, $t_1$ als annähernd gleich angenommen werden können, wenn die beiden Zeitpunkte $t_0$, $t_1$ möglichst dicht beieinander liegen.

Gemäß einer bevorzugten Ausführungsform der Erfindung ist das erfindungsgemäße Berechnungsmittel derart ausgestaltet, um die Fahrzeugmasse $m$ durch einen rekursiven Schätzalgorithmus zu bestimmen. Dadurch wird vorteilhaft die Genauigkeit bei der Bestimmung der Masse $m$ des Kraftfahrzeugs erhöht, da die Masse $m$ aufgrund des rekursiven Schätzalgorithmus an einen optimalen Wert angenähert wird.

In einer weiteren bevorzugten Ausführungsform der Erfindung ist der rekursive Schätzalgorithmus ein Kleinste-Quadrate-Algorithmus (RLS-Algorithmus) oder ein Kalman-Algorithmus.

In einer weiteren Ausführungsform der Erfindung sind Mittel zum Bestimmen eines Mittelwerts $\hat{m}$ aus mindestens drei verschiedenen Messwerten der Masse $m$ des Kraftfahrzeugs vorgesehen, wobei die jeweilige Varianz des Messwertes bei der Mittelwertbildung berücksichtigt wird. Bevorzugt wird der Kehrwert der Varianz dabei als ein Wichtungsfaktor verwendet.

Um vorteilhaft zu vermeiden, dass der Mittelwert $\hat{m}$ durch evtl. vorhandene Ausreißer verfälscht wird, weist die erfindungsgemäße Vorrichtung Mittel zum Prüfen auf, ob ein Messwert um mehr als ein vorgegebener Grenzwert von dem temporär ermittelten Mittelwert $\hat{m}$ abweicht. Derart erkannte Ausreißer werden vorteilhaft nicht berücksichtigt bei der Ermittlung des auszugebenden Werts für die Masse $m$ des Kraftfahrzeugs.

Weitere Ausführungsformen der Erfindung ergeben sich aus den Ansprüchen sowie aus den anhand der Zeichnung näher erläuterten Ausführungsbeispielen. In der Zeichnung zeigen:

Fig. 1    ein Blockschaltbild zur Erläuterung des erfindungsgemäßen Verfahrens zum Bestimmen der Masse eines Kraftfahrzeugs und

Fig. 2    ein Flussdiagramm zur Erläuterung der erfindungsgemäßen Mittelwertbildung.

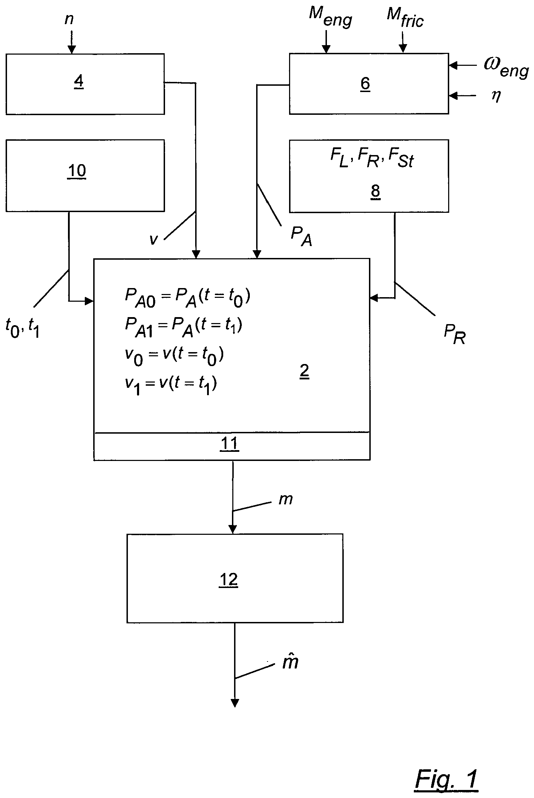

Figur 1 zeigt ein Blockschaltbild zur Erläuterung des erfindungsgemäßen Verfahrens zum Bestimmen der Masse $m$ eines Kraftfahrzeugs. Zur Durchführung des Verfahrens sind Berechnungsmittel 2 vorgesehen, die anhand von mehreren Eingangsgrößen eine Masse $m$ des Kraftfahrzeugs ermitteln.

Für die zur Bestimmung der Masse $m$ benötigten Eingangsgrößen werden zum Einen Mittel 4 zum Bestimmen der Geschwindigkeit $v$ bereitgestellt sowie Mittel 6 zum Bestimmen der Antriebsleistung $P_A$. Es können dabei jedwede Vorgehensweisen, die benötigten Eingangsgrößen zu ermitteln, im Rahmen der vorliegenden Erfindung eingesetzt werden.

Im Gegensatz zu herkömmlichen Verfahren zum Bestimmen der Masse $m$ eines Kraftfahrzeugs wird nicht die Bewegungsgleichung dem Verfahren zugrunde gelegt sondern der Leistungssatz. Die Erfindung hat erkannt, dass die Antriebsleistung $P_A$ einfach über die Motormomente $M_{eng}$, $M_{fric}$ unter Berücksichtigung der Winkelgeschwindigkeit des Motors $\omega_{eng}$ mit Hilfe der Mittel 6 bestimmbar ist. Zum Bestimmen der Masse $m$ des Kraftfahrzeugs sind in dem Berechnungsmittel 2 verschiedene Ansätze berücksichtigt. Verfügt die Vorrichtung über geeignete Mittel 8 zum Bestimmen der Leistung $P_R$ zum Überwinden der Fahrwiderstände, wird diese Leistung $P_R$ dem Berechnungsmittel 2 übergeben. Dazu müssen jedoch die einzelnen Fahrwiderstände $F_L$, $F_R$, $F_{St}$ des Kraftfahrzeugs bekannt sein.

Ist dies nicht der Fall, werden mittels eines Zeitgebers 10 zwei Zeitpunkte $t_0$, $t_1$ bestimmt, die möglichst nahe beieinander liegen, so dass die Fahrwiderstände $F_L$, $F_R$, $F_{St}$ zu beiden Zeitpunkten $t_0$, $t_1$ im Wesentlichen identisch sind. Liegen die Zeitpunkte $t_0$, $t_1$ nämlich nahe genug beieinander, kann man davon ausgehen, dass sich auch die Fahrwiderstände $F_L$, $F_R$, $F_{St}$ innerhalb dieser kurzen Zeitspanne nicht wesentlich geändert haben.

Die Berechnungsmittel 2 sind derart ausgestaltet, um aus den Geschwindigkeiten $v_0$, $v_1$ des Kraftfahrzeugs zu den beiden Zeitpunkten $t_0$, $t_1$ und aus den Antriebsleistungen $P_{A0}$, $P_{A1}$ gemäß Gleichung (9) die Masse $m$ des Kraftfahrzeugs zu ermitteln.

Dabei werden für die Bestimmung der Rotationsenergie benötigten Trägheitsmomente der rotierenden Massen geschätzt oder als Fahrzeugparameter gespeichert.

Um die Anzahl der fehlerhaften Berechnungen der Masse $m$ des Kraftfahrzeugs zu minimieren, wird bevorzugt ein rekursiver Schätzalgorithmus 11 in dem Berechnungsmittel 2 zum Bestimmen der Masse $m$ angewendet. Denn z.B. durch verrauschte Signale und/oder durch schnell variierende Fahrwiderstände können die Werte für die Masse $m$ des Kraftfahrzeugs verfälscht werden. Der rekursive Schätzalgorithmus 11 minimiert das Fehlerquadrat des Schätzfehlers. Vorteilhaft ist, dass dabei bisherige Messwerte in die aktuelle Schätzung mit eingehen, womit für die Schätzung mehr Informationen zur Verfügung stehen.

Eine Ausführungsform der Erfindung sieht vor, dass der rekursive Schätzalgorithmus 11 der Kleinste-Quadrate-Algorithmus, auch RLS-Algorithmus genannt, ist. Dieser Algorithmus ist dem Fachmann an sich bekannt und wird daher hier nicht weiter erläutert.

Eine alternative Ausführungsform der Erfindung sieht vor, dass der rekursive Schätzalgorithmus 11 der Kalman-Algorithmus ist. Dieser Algorithmus ist dem Fachmann ebenfalls bekannt und wird daher hier nicht weiter erläutert.

Aufgrund des vorstehend genannten rekursiven Schätzalgorithmus 11, welcher in dem Berechnungsmittel 2 zum Bestimmen der Masse $m$ des Kraftfahrzeugs angewandt wird, handelt es sich bei der vom Berechnungsmittel 2 ausgegebenen Masse $m$ bereits vorteilhaft um einen Messwert mit hoher Güte.

Dieser Messwert für die Masse $m$ wird einem weiteren Mittel 12 zum Bestimmen eines Mittelwerts übergeben und gespeichert, um das Risiko einer Fehlerberechnung, insbesondere durch Ausreißer in den Messwerten, zu minimieren.

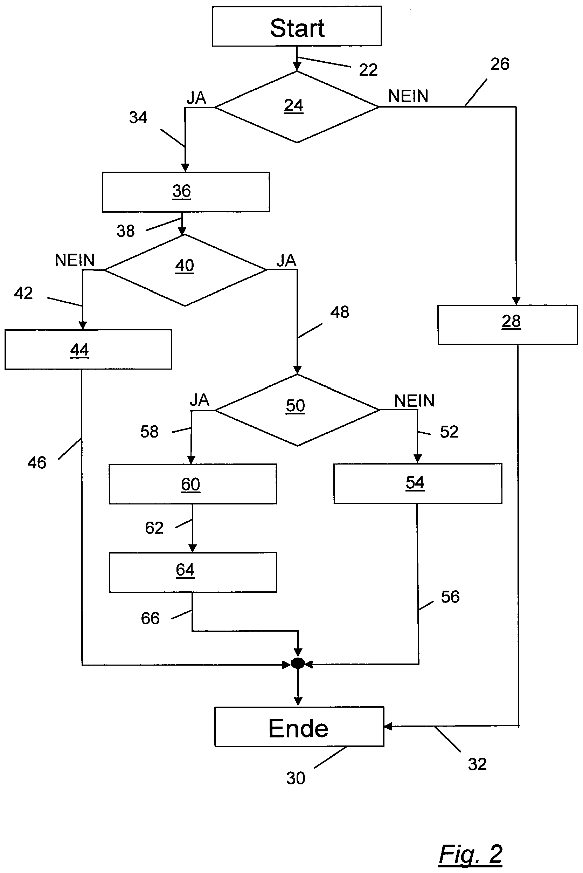

Figur 2 zeigt ein Flussdiagramm zur Erläuterung der in Block 12 von Figur 1 angewandten Mittelwertbildung. Das Start-Symbol ist über einen Verbindungszweig 22 mit einem Abfragesymbol 24 verbunden, welches abfragt, ob drei Messwerte für die Masse $m$ vorliegen. Solange keine drei Messwerte für die Masse $m$ vorliegen, wird ein Nein-Signal 26 an Block 28 übergeben, welcher das Warten auf weitere Messwerte für die Masse $m$ signalisiert. Das Ende-Symbol 30 wird über einen Verbindungszweig 32 von Block 28 aus erreicht und das Verfahren kann erneut beginnen.

Wird von dem Abfrage-Symbol 24 jedoch erkannt, dass drei Messwerte für die Masse $m$ vorliegen, wird ein Ja-Signal 34 an einen Block 36 übergeben, in dem aus den drei Messwerten ein Mittelwert berechnet wird. Dieser Mittelwert wird unter Berücksichtigung der Varianz der einzelnen Messwerte berechnet, indem der Kehrwert der Varianz als Wichtungsfaktor verwendet wird.

Um zu vermeiden, dass ggf. vorhandene Ausreißer in den Messwerten der Masse $m$ den zu bildenden Mittelwert verfälschen, wird der im Block 36 berechnete Mittelwert über einen Zweig 38 einem Abfrage-Symbol 40 übergeben. Hier wird überprüft, ob mindestens einer der Messwerte der Masse $m$ um einen vorbestimmten Wert von dem in Block 36 berechneten Mittelwert abweicht.

Ist dies nicht der Fall, wird ein Nein-Signal 42 an einen Block 44 übergeben, indem der auszugebende Wert für die Masse *m* des Kraftfahrzeugs gleich dem zuvor berechneten Mittelwert gesetzt wird. Über einen Zweig 46 wird dann das Ende-Symbol 30 erreicht.

Wird jedoch von dem Abfrage-Symbol 40 erkannt, dass mindestens ein Messwert für die Masse *m* von dem Mittelwert abweicht, wird ein Ja-Signal 48 einem weiteren Abfrage-Symbol 50 übergeben. Hier wird überprüft, ob nur ein Messwert für die Masse *m* signifikant von dem Mittelwert abweicht.

Ist dies nicht der Fall, d.h., es weichen mehr als ein Messwert signifikant von dem Mittelwert ab, wird ein Nein-Signal 52 an einen Block 54 übergeben, in dem die Messwerte für die Masse *m* für diesen Messdurchgang verworfen werden. Über einen Zweig 56 wird anschließend das Ende-Symbol 30 erreicht und das Verfahren kann erneut gestartet werden.

Für den Fall, dass nur ein Messwert für die Masse *m* signifikant von dem Mittelwert abweicht, wird von dem Abfrager 50 ein Ja-Signal 58 einem Block 60 übergeben. In dem Block 60 wird dann ein neuer Mittelwert unter Berücksichtigung der Varianz aus den beiden verbliebenen Messwerten für die Masse *m* berechnet, d.h., derjenige Messwert, der signifikant von dem zuvor berechneten Mittelwert abweicht, wird verworfen.

Der neu bestimmte Mittelwert wird über einen Zweig 62 einem Block 64 übergeben, in dem der auszugebende Wert für die Masse *m* des Kraftfahrzeugs gleich dem neu bestimmten Mittelwert gesetzt wird. Über einen Zweig 66 wird dann das Ende-Symbol 30 erreicht.

Bei Erreichen des Ende-Symbols 30, wird von dem in Figur 1 dargestellten Mittel 12 zum Bestimmen eines Mittelwerts der zuvor ermittelte auszugebende Wert für die Masse *m* des Kraftfahrzeugs als gemittelte Fahrzeugmasse $\hat{m}$ ausgegeben. Dieser Schätzwert $\hat{m}$ der Fahrzeugmasse wird vorzugsweise einen Regel-Algorithmus des Kraftfahrzeugs als Eingangsgröße zur Verfügung gestellt. Dies kann z.B. ein ABS- oder EBS-Steuergerät sein. Es sind jedoch auch potentiell weitere Steuergeräte denkbar, für die die Fahrzeugmasse von Interesse ist.

Eine mögliche Anwendung für das gemäß Figur 2 erläuterte Verfahren ist die Erkennung von Ausreißern bei der Schätzung der Fahrzeugmasse *m.* Das Verfahren zum Bilden eines Mittelwerts lässt sich jedoch zur Verbesserung der Genauigkeit jedweder statischer Fahrzeugparameter anwenden. Dabei können die Parameter gemessen oder mittels geeigneter Algorithmen geschätzt werden. Die Genauigkeit der Fahrzeugparameter wird mit dem erfindungsgemäßen Verfahren durch relativ einfache Berechnungsschritte vorteilhaft verbessert.

Da die Berechnung der Masse *m* des Kraftfahrzeugs erfindungsgemäß auf der Antriebsleistung $P_A$ basiert, entfällt vorteilhaft die Bestimmung der Zugkraft. Das erfindungsgemäße Verfahren lässt sich vorteilhaft bei Kraftfahrzeugen mit konventionellen Antriebssträngen sowie Allrad- und Hybridantrieben verwenden.

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar. Die Offenbarung der Erfindung ist daher nicht auf die beschriebenen bzw. beanspruchten Merkmalskombinationen beschränkt. Vielmehr sind alle im Rahmen der Erfindung sinnvollen Merkmalskombinationen als offenbart zu betrachten.

Bezugszeichenliste (Bestandteil der Beschreibung)

| | |
|---|---|
| 2 | Berechnungsmittel |
| 4 | Mittel zum Bestimmen der Geschwindigkeit *v* |
| 6 | Mittel zum Bestimmen der Antriebsleistung $P_A$ |
| 8 | Mittel zum Bestimmen der Leistung $P_R$ zum Überwinden der Fahrwiderstände |
| 10 | Zeitgeber |
| 11 | Rekursiver Schätzalgorithmus |
| 12 | Mittel zum Bestimmen eines Mittelwertes |
| 22 | Verbindungszweig |
| 24 | Abfragesymbol |
| 26 | Nein-Signal |
| 28 | Block (Warten) |
| 30 | Ende-Symbol |
| 32 | Verbindungszweig |
| 34 | Ja-Signal |
| 36 | Block (Mittelwert) |
| 38 | Zweig berechneter Mittelwert |
| 40 | Abfrage-Symbol (Ausreißer) |
| 42 | Nein-Signal |
| 44 | Block (Zuweisung) |

| 46 | Zweig zum Ende-Symbol |
|---|---|
| 48 | Ja-Signal |
| 50 | Abfrage-Symbol |
| 52 | Nein-Signal |
| 54 | Block (Messwerte verwerfen) |
| 56 | Zweig zum Ende-Symbol |
| 58 | Ja-Signal |
| 60 | Block (Mittelwert) |
| 62 | Zweig Mittelwert |
| 64 | Block (Zuweisung) |
| 66 | Zweig zum Ende-Symbol |
| $F_L$ | Luftwiderstand des Kraftfahrzeugs |
| $F_R$ | Rollwiderstand des Kraftfahrzeugs |
| $F_{St}$ | Steigungswiderstand des Kraftfahrzeugs |
| $m$ | Masse des Kraftfahrzeugs |
| $\hat{m}$ | Mittelwert der Masse $m$ |
| $M_{eng}$ | Antriebsmoment des Motors |
| $M_{fric}$ | Reibmoment des Motors |
| $n$ | Raddrehzahlsignal |
| $P_A$ | Antriebsleistung |
| $P_{A0}$ | Antriebsleistung zum Zeitpunkt t=0 |
| $P_{A1}$ | Antriebsleistung zum Zeitpunkt t=1 |
| $P_R$ | Leistung zum Überwinden der Fahrwiderstände |
| $t_0$ | Erster Zeitpunkt |
| $t_1$ | Zweiter Zeitpunkt |
| $v$ | Geschwindigkeit des Kraftfahrzeugs |
| $v_0$ | Geschwindigkeit zum Zeitpunkt t=0 |
| $v_1$ | Geschwindigkeit zum Zeitpunkt t=1 |
| $\eta$ | Parametrierte Wirkungsgrad des Antriebsstrangs |
| $\omega_{eng}$ | Winkelgeschwindigkeit des Motors |

**Patentansprüche**

1. Verfahren zum Bestimmen der Masse (m) eines Kraftfahrzeugs, insbesondere eines Nutzfahrzeugs, wobei eine Geschwindigkeit (v) des Kraftfahrzeugs ermittelt wird und eine Antriebsleistung (PA) des Kraftfahrzeugs ermittelt wird und die Masse (m) des Kraftfahrzeugs ermittelt wird aus der Geschwindigkeit (v) und der Antriebsleistung (PA), **dadurch gekennzeichnet, dass**
die Geschwindigkeit (v) des Kraftfahrzeugs für zwei voneinander verschiedene Zeitpunkte (t0, t1) ermittelt wird und die Antriebsleistung (PA) des Kraftfahrzeugs für diese zwei Zeitpunkte (t0, t1) ermittelt wird, wobei der zeitliche Abstand der beiden Zeitpunkte (t0, t1) derart gewählt wird, dass die zu den Zeitpunkten (t0, t1) zugehörigen Fahrwiderstände (FL, FR, FSt) nicht signifikant zwischen den Zeitpunkten (t0, t1) abweichen und die Masse (m) des Kraftfahrzeugs ermittelt wird aus den Geschwindigkeiten (v0, v1) und den Antriebsleistungen (PA0, PA1) zu den beiden Zeitpunkten (t0, t1).

2. Verfahren nach Anspruch 1,
**dadurch gekennzeichnet, dass**
eine Leistung (PR) zum Überwinden von Fahrwiderständen ermittelt wird und die Masse (m) des Kraftfahrzeugs ermittelt wird aus der Geschwindigkeit (v), der Antriebsleistung (PA) und der Leistung (PR) zum Überwinden der Fahrwiderstände, wobei die Differenz der Antriebsleistung (PA) und der Leistung (PR) zum Überwinden der Fahrwiderstände der Änderung der kinetischen Energie des Kraftfahrzeugs entspricht.

3. Verfahren nach Anspruch 1 oder 2,
**dadurch gekennzeichnet, dass**
die Geschwindigkeit (v) des Kraftfahrzeugs mittels eines gemessenen Raddrehzahlsignals (n) ermittelt wird.

4. Verfahren nach einem der vorhergehenden Ansprüche,

**dadurch gekennzeichnet, dass**

die Antriebsleistung (PA) des Kraftfahrzeugs wie folgt ermittelt wird:

$$PA = (M_{eng} - M_{fric}) \ \omega_{eng} \ \eta$$

wobei PA die Antriebsleistung, $M_{eng}$ das Antriebsmoment des Motors, $M_{fric}$ das Reibmoment des Motors, $\omega$eng die Winkelgeschwindigkeit des Motors und $\eta$ der parametrierte Wirkungsgrad des Antriebsstrangs ist.

5.  Verfahren nach einem der vorhergehenden Ansprüche,
**dadurch gekennzeichnet, dass**
die Leistung (PR) zum Überwinden der Fahrwiderstände aus der Summe der einzelnen Fahrwiderstände (FL, FR, FSt) multipliziert mit der Geschwindigkeit (v) des Kraftfahrzeugs ermittelt wird.

6.  Verfahren nach einem der vorstehenden Ansprüche,
**dadurch gekennzeichnet, dass**
die Masse (m) des Kraftfahrzeugs aus der Geschwindigkeit (v) und der Antriebsleistung (PA) mit einem rekursiven Schätzalgorithmus (11) ermittelt wird.

7.  Verfahren nach Anspruch 6,
**dadurch gekennzeichnet, dass**,
der rekursive Schätzalgorithmus (11) mittels eines Kalman-Filters oder mittels eines rekursiven Kleinste-Quadrate-Schätzers (RLS-Filter) durchgeführt wird.

8.  Verfahren nach einem der vorhergehenden Ansprüche,
**dadurch gekennzeichnet, dass**
aus mindestens drei Messwerten für die Masse (m) des Kraftfahrzeugs ein Mittelwert ($\hat{m}$) gebildet wird, wobei die Berechnung des Mittelwerts ($\hat{m}$) unter Berücksichtigung der Varianz der jeweiligen Messwerte für die Masse (m) des Kraftfahrzeugs erfolgt.

9.  Vorrichtung zur Bestimmung der Masse (m) eines Kraftfahrzeugs, insbesondere eines Nutzfahrzeugs, enthaltend Mittel (4) zum Bestimmen einer Geschwindigkeit (v) des Kraftfahrzeugs, Mittel (6) zum Bestimmen einer Antriebsleistung (PA) des Kraftfahrzeugs und Berechnungsmittel (2) zum Ermitteln der Masse (m) aus der Geschwindigkeit (v) und der Antriebsleistung (PA), **dadurch gekennzeichnet, dass**
die Geschwindigkeit (v) des Kraftfahrzeugs für zwei voneinander verschiedene Zeitpunkte (t0, t1) ermittelt wird und die Antriebsleistung (PA) des Kraftfahrzeugs für diese zwei Zeitpunkte (t0, t1) ermittelt wird, wobei der zeitliche Abstand der beiden Zeitpunkte (t0, t1) derart gewählt wird, dass die zu den Zeitpunkten (t0, t1) zugehörigen Fahrwiderstände (FL, FR, FSt) nicht signifikant zwischen den Zeitpunkten (t0, t1) abweichen und
die Masse (m) des Kraftfahrzeugs ermittelt wird aus den Geschwindigkeiten (v0, v1) und den Antriebsleistungen (PA0, PA1) zu den beiden Zeitpunkten (t0, t1).

10. Vorrichtung gemäß Anspruch 9, **gekennzeichnet durch** Mittel (8) zum Bestimmen einer Leistung (PR) zum Überwinden von Fahrwiderständen und eine Ausgestaltung der Berechnungsmittel (2) derart, um die Masse (m) aus der Geschwindigkeit (v), der Antriebsleistung (PA) und der Leistung (PR) zum Überwinden von Fahrwiderständen zu ermitteln.

11. Vorrichtung nach einem der Ansprüche 9 bis 10,
**gekennzeichnet durch**
eine Ausgestaltung der Berechnungsmittel (2) derart, dass die Masse (m) des Kraftfahrzeugs durch einen rekursiven Schätzalgorithmus (11) bestimmbar ist.

12. Vorrichtung nach Anspruch 11,
**dadurch gekennzeichnet, dass**
der rekursive Schätzalgorithmus (11) ein Kleinste-Quadarate-Algorithmus oder ein Kalman-Algorithmus ist.

13. Vorrichtung nach einem der Ansprüche 9 bis 12,
**gekennzeichnet durch**
Mittel (12) zum Bestimmen eines Mittelwerts (m) aus mindestens drei verschiedenen Messwerten der Masse (m) des Kraftfahrzeugs, wobei jeweils eine Varianz der Messwerte berücksichtigt wird.

14. Kraftfahrzeug, insbesondere Nutzfahrzeug,
    **gekennzeichnet durch**
    eine Vorrichtung zur Bestimmung der Masse (m) eines Kraftfahrzeugs nach einem der Ansprüche 9 bis 13 und/oder
    eine Vorrichtung mit Mitteln zum Durchführen der Schritte eines Verfahrens nach einem der Ansprüche 1 bis 8.

**Claims**

1. Method for determining the mass (m) of a motor vehicle, in particular a commercial vehicle, wherein
   a speed (v) of the motor vehicle is determined and
   a drive power (PA) of the motor vehicle is determined and
   the mass (m) of the motor vehicle is determined from the speed (v) and the drive power (PA), **characterized in that**
   the speed (v) of the motor vehicle is determined for two mutually different instants (t0, t1), and the drive power (PA) of the motor vehicle is determined for said two instants (t0, t1), the time interval between the two instants (t0, t1) being selected in such a way that the driving resistances (FL, FR, FSt) belonging to the instants (t0, t1) do not differ significantly between the instants (t0, t1), and
   the mass (m) of the motor vehicle is determined from the speeds (v0, v1) and the drive powers (PA0, PA1) at the two instants (t0, t1).

2. Method according to Claim 1,
   **characterized in that**
   a power (PR) for overcoming driving resistances is determined, and
   the mass (m) of the motor vehicle is determined from the speed (v), the drive power (PA) and the power (PR) for overcoming the driving resistances, the difference between the drive power (PA) and the power (PR) for overcoming the driving resistances corresponding to the change in the kinetic energy of the motor vehicle.

3. Method according to Claim 1 or 2,
   **characterized in that**
   the speed (v) of the motor vehicle is determined by means of a measured wheel rotational speed signal (n).

4. Method according to one of the preceding claims, **characterized in that**
   the drive power (PA) of the motor vehicle is determined as follows:

$$PA = (M_{eng} - M_{fric})\ \omega_{eng}\ \eta,$$

PA being the drive power, $M_{eng}$ being the drive torque of the engine, $M_{fric}$ being the frictional torque of the engine, $\omega$eng being the angular velocity of the engine, and $\eta$ being the parameterized efficiency of the drivetrain.

5. Method according to one of the preceding claims, **characterized in that**
   the power (PR) for overcoming the driving resistances is determined from the sum of the individual driving resistances (FL, FR, FSt) multiplied by the speed (v) of the motor vehicle.

6. Method according to one of the preceding claims, **characterized in that**
   the mass (m) of the motor vehicle is determined from the speed (v) and the drive power (PA) by using a recursive estimation algorithm (11).

7. Method according to Claim 6,
   **characterized in that**
   the recursive estimation algorithm (11) is carried out by means of a Kalman filter or by means of a recursive least squares estimator (RLS filter).

8. Method according to one of the preceding claims, **characterized in that**
   a mean value ($\hat{m}$) is formed from at least three measured values for the mass (m) of the motor vehicle, the calculation of the mean value ($\hat{m}$) being performed taking account of the variance of the respective measured values for the mass (m) of the motor vehicle.

9. Device for determining the mass (m) of a motor vehicle, in particular a commercial vehicle, containing
means (4) for determining a speed (v) of the motor vehicle,
means (6) for determining a drive power (PA) of the motor vehicle and calculating means (2) for determining the
mass (m) from the speed (v) and the drive power (PA),
**characterized in that**
the speed (v) of the motor vehicle is determined for two mutually different instants (t0, t1), and the drive power (PA)
of the motor vehicle is determined for said two instants (t0, t1), the time interval between the two instants (t0, t1)
being selected in such a way that the driving resistances (FL, FR, FSt) belonging to the instants (t0, t1) do not differ
significantly between the instants (t0, t1), and
the mass (m) of the motor vehicle is determined from the speeds (v0, v1) and the drive powers (PA0, PA1) at the
two instants (t0, t1).

10. Device according to Claim 9,
**characterized by**
means (8) for determining a power (PR) for overcoming driving resistances, and
an embodiment of the calculating means (2) which is such as to determine the mass (m) from the speed (v), the
drive power (PA) and the power (PR) for overcoming driving resistances.

11. Device according to one of Claims 9 to 10, **characterized by**
an embodiment of the calculating means (2) which is such as to enable the determination of the mass (m) of the
motor vehicle by a recursive estimation algorithm (11).

12. Device according to Claim 11,
**characterized in that**
the recursive estimation algorithm (11) is a least squares algorithm or a Kalman algorithm.

13. Device according to one of Claims 9 to 12, **characterized by**
means (12) for determining a mean value ($\hat{m}$) from at least three different measured values of the mass (m) of the
motor vehicle, a variance of the measured values being taken into account in each case.

14. Motor vehicle, in particular commercial vehicle, **characterized by**
a device for determining the mass (m) of a motor vehicle according to one of Claims 9 to 13, and/or a device having
means for carrying out the steps of a method according to one of Claims 1 to 8.

**Revendications**

1. Procédé de détermination de la masse (m) d'un véhicule automobile et en particulier d'un véhicule utilitaire, dans
lequel
la vitesse (v) du véhicule automobile est déterminée et
la puissance d'entraînement (PA) du véhicule automobile est déterminée et
la masse (m) du véhicule automobile est déterminée à partir de la vitesse (v) et de la puissance d'entraînement (PA),
**caractérisé en ce que**
la vitesse (v) du véhicule automobile est déterminée en deux instants (t0, t1) différents l'un de l'autre et la puissance
d'entraînement (PA) du véhicule automobile est déterminée pour ces deux instants (t0, t1), l'écart temporel entre
les deux instants (t0, t1) étant sélectionné de telle sorte que les résistances au roulage (FL, FR, FSt) associées aux
instants (0, t1) ne s'écartent pas significativement les unes des autres entre les instants (t0, t1) et
la masse (m) du véhicule automobile étant déterminée à partir des vitesses (v0, v1) et des puissances d'entraînement
(PA0, PA1) aux deux instants (t0, t1).

2. Procédé selon la revendication 1, **caractérisé en ce que** la puissance (PR) nécessaire pour surmonter les résistances au roulage est déterminée et la masse (m) du véhicule automobile est déterminée à partir de la vitesse (v),
de la puissance d'entraînement (PA) et de la puissance (PR) nécessaire à surmonter les résistances au roulage,
la différence entre la puissance d'entraînement (PA) et la puissance (PR) nécessaire pour surmonter les résistances
au roulage correspondant à la modification de l'énergie cinétique du véhicule automobile.

3. Procédé selon les revendications 1 ou 2, **caractérisé en ce que** la vitesse (v) du véhicule automobile est déterminée
au moyen d'un signal (n) mesuré de vitesse de rotation des roues.

4.  Procédé selon l'une des revendications précédentes, **caractérisé en ce que** la puissance d'entraînement (PA) du véhicule automobile est déterminée de la manière suivants :

$$PA = (M_{eng} - M_{fric}) \; \omega_{eng} \; \eta$$

dans laquelle PA représente la puissance d'entraînement, $M_{eng}$ le couple d'entraînement du moteur, $M_{fric}$ le couple de frottement du moteur, $\omega_{eng}$ la vitesse angulaire du moteur et $\eta$ le rendement paramétré du train d'entraînement.

5.  Procédé selon l'une des revendications précédentes, **caractérisé en ce que** la puissance (PR) nécessaire pour surmonter les résistances au roulage est déterminée à partir de la somme des différentes résistances au roulage (FL, FR, FSt) multipliée par la vitesse (v) du véhicule automobile.

6.  Procédé selon l'une des revendications précédentes, **caractérisé en ce que** la masse (m) du véhicule automobile est déterminée à partir de la vitesse (v) et de la puissance d'entraînement (PA) à l'aide d'un algorithme récursif d'estimation (11).

7.  Procédé selon la revendication 6, **caractérisé en ce que** l'algorithme récursif d'estimation (11) est mis en oeuvre au moyen d'un filtre de Kalman ou au moyen d'un estimateur récursif de moindres carrés (filtre RLS)

8.  Procédé selon l'une des revendications précédentes, **caractérisé en ce qu'**une valeur moyenne ($\hat{m}$) est formée d'au moins trois valeurs de mesure de la masse (m) du véhicule automobile, le calcul de la valeur moyenne ($\hat{m}$) s'effectuant en tenant compte de la variance des différentes valeurs de mesure de la masse (m) du véhicule automobile.

9.  Ensemble de détermination de la masse (m) d'un véhicule automobile, en particulier d'un véhicule utilitaire, contenant :

    des moyens (4) de détermination de la vitesse (v) du véhicule automobile,
    des moyens (6) de détermination de la puissance d'entraînement (PA) du véhicule automobile et
    des moyens de calcul (2) qui déterminent la masse (m) à partir de la vitesse (v) et de la puissance d'entraînement (PA),
    **caractérisé en ce que**
    la vitesse (v) du véhicule automobile est déterminée en deux instants (t0, t1) différents l'un de l'autre et la puissance d'entraînement (PA) du véhicule automobile est déterminée pour ces deux instants (t0, t1), l'écart temporel entre les deux instants (t0, t1) étant sélectionné de telle sorte que les résistances au roulage (FL, FR, FSt) associées aux instants (0, t1) ne s'écartent pas significativement les unes des autres entre les instants (t0, t1) et
    la masse (m) du véhicule automobile étant déterminée à partir des vitesses (v0, v1) et des puissances d'entraînement (PA0, PA1) aux deux instants (t0, t1).

10. Procédé selon la revendication 9, **caractérisé par** des moyens (8) qui déterminent la puissance (PR) nécessaire pour surmonter les résistances au roulage et un mode de réalisation des moyens de calculs (2) tel qu'il puisse déterminer la masse (m) à partir de la vitesse (v), de la puissance d'entraînement (PA) et de la puissance (PR) nécessaire pour surmonter les résistances au roulage.

11. Ensemble selon l'une des revendications 9 à 10, **caractérisé par** un mode de réalisation des moyens de calculs (2) qui leur permette de déterminer la masse (m) du véhicule automobile par un algorithme récursif d'estimation (11).

12. Ensemble selon la revendication 11, **caractérisé en ce que** l'algorithme récursif d'estimation (11) est un algorithme à moindres carrés ou un algorithme de Kalman.

13. Ensemble selon l'une des revendications 9 à 12, **caractérisé par** des moyens (12) de détermination d'une valeur moyenne (m) à partir d'au moins trois valeurs de mesure différentes de la masse (m) du véhicule automobile, la variance de chacune des valeurs de mesure étant prise en compte.

14. Véhicule automobile et en particulier véhicule utilitaire
    **caractérisé par**

**12**

un ensemble de détermination de la masse (m) du véhicule automobile selon l'une des revendications 9 à 13 et/ou par un ensemble présentant des moyens permettant de mettre en oeuvre les étapes d'un procédé selon l'une des revendications 1 à 8.

$$P_{A0} = P_A(t = t_0)$$
$$P_{A1} = P_A(t = t_1)$$
$$v_0 = v(t = t_0)$$
$$v_1 = v(t = t_1)$$

*Fig. 1*

*Fig. 2*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130124077 A1
- DE 19728769 A1